# EUROPÄISCHE PATENTSCHRIFT

(11) **EP 3 994 757 B1**
(45) Veröffentlichungstag und Bekanntmachung des Hinweises auf die Patenterteilung: **03.06.2026**
(21) Anmeldenummer: 20736314.4
(22) Anmeldetag: 01.07.2020
(51) Int. Cl.: H01M 10/613, F04C 2/16, H01M 10/625, H01M 10/6568

(54) **TEMPERIERUNGSVORRICHTUNG FÜR EIN BATTERIESPEICHERMODUL**
TEMPERATURE CONTROL DEVICE FOR A BATTERY BANK MODULE
DISPOSITIF DE THERMORÉGULATION POUR UN MODULE D'ACCUMULATEUR DE BATTERIE

(30) Priorität: 04.07.2019 DE 102019118094
(43) Veröffentlichungstag der Anmeldung: 11.05.2022
(73) Patentinhaber: NIDEC GPM GmbH, 98673 Auengrund /OT Merbelsrod (DE)
(72) Erfinder: PAWELLEK, Franz, 96486 Lautertal (DE)
(74) Vertreter: Kuhnen & Wacker Patent- und Rechtsanwaltsbüro PartG mbB
(86) Internationale Anmeldenummer: PCT/EP2020/068462
(87) Internationale Veröffentlichungsnummer: WO 2021/001402

(56) Entgegenhaltungen:
- WO-A1-2018/163180
- WO-A1-2020/164776
- US-A1- 2018 287 225
- US-A1- 2019 111 862

## Beschreibung

Die vorliegende Erfindung betrifft eine Temperierungsvorrichtung für ein Batteriespeichermodul, beispielsweise in einer Traktionsbatterie eines elektrischen Fahrzeugs.

Eine Temperierung von Batteriespeichermodulen dient insbesondere dazu eine Abwärme, die während eines Ladens oder einer Leistungsentnahme entsteht, mittels eines Temperierungsmediums über einen Wärmetauscher abzuführen.

Die Kühlkreisläufe batterieelektrischer Fahrzeuge weisen eine hohe Komplexität mit einer Vielzahl an Leitungsverzweigungen, Fluidanschlüssen sowie diversen Pumpen und Ventilen auf. Eine Aufteilung des Durchlassquerschnitts des gesamten Kühlkreislaufs auf Leitungsverzweigungen, wie Netzwerke von Kühlkanälen mit entsprechend kleineren, gegebenenfalls kapillaren Durchlassquerschnitten, erfordern einen wesentlich höheren Förderdruck als in einem vergleichsweise großvolumigen Kühlkreislauf eines Verbrennungsmotors. Derartige Strukturen eines verzweigten Kühlkreislaufs entstehen vermehrt bei der Konstruktion von Batteriespeichermodulen, in denen eine Vielzahl von Batteriezellen durch kleine Kanäle gekühlt wird.

Eine Aufgabe der vorliegenden Erfindung besteht in der Schaffung einer alternativen Technik zur Temperierung eines Batteriespeichermoduls mit einem verzweigten Temperierungskreislauf.

Ein weiterer Teilaspekt der Aufgabenstellung besteht ferner darin, eine entsprechende technische Lösung derart bereitzustellen, dass sie sich auch in einer Serienfertigung von großen Stückzahlen kostengünstig realisieren lässt.

Die Aufgabe wird erfindungsgemäß durch eine Temperierungsvorrichtung mit den Merkmalen des Anspruchs 1 gelöst. Die Temperierungsvorrichtung für ein Batteriespeichermodul zeichnet sich insbesondere dadurch aus, dass eine Pumpe der Temperierungsvorrichtung ein Spindelgehäuse mit einer Einlassöffnung und einer Auslassöffnung; und wenigstens eine Schraubenspindel, die in dem Spindelgehäuse drehbar aufgenommen und mit einem Elektromotor gekoppelt ist, umfasst; wobei der Elektromotor als Trockenläufer ausgebildet ist, und zu dem Spindelgehäuse abgegrenzt angeordnet ist.

Die erfindungsgemäße Temperierungsvorrichtung ermöglicht höhere Förderdrücke in dem Temperierungskreislauf als sie mit einer Kreiselpumpe erzielbar sind. Im Vergleich zu Kreiselpumpen stellt die Pumpe der erfindungsgemäßen Temperierungsvorrichtung ein höheres Förderdruckpotential für Kühlkreisläufe bzw. Temperierungskreisläufe mit Leitungsverzweigungen und entsprechenden Engpässen zur Verfügung.

Bei Kühlmittelpumpen vom Kreiselpumpentyp stellt ein axialer Spalt zwischen einem Flügelrad und der Pumpenkammer die größte Schwachstelle bezüglich der Abdichtung zwischen der Saugseite und der Druckseite der Pumpe dar. Eine Leckage an dem axialen Spalt und ein entsprechender Verlust der Förderleistung nehmen bei höheren Förderdrücken zu. Die Einstellung eines dichtungswirksamen Spaltmaßes hängt von der Maßhaltigkeit einer axialen Passung zwischen Flügelrad und Gehäuse nach einer Montage ab. Bei der Fertigung von Kreiselpumpen für höhere Förderdrücke gelangen der Aufwand und die Kosten für die Sicherstellung eines geeigneten axialen Dichtspalts an Grenzen der Wirtschaftlichkeit. Anderenfalls ist eine volumetrische Effizienz bei höheren Förderdrücken beeinträchtigt.

Bei einer Schraubenspindelmechanik der erfindungsgemäßen Temperierungsvorrichtung erstreckt sich der effektive Dichtspalt über die Gesamtlänge der Schraubenspindeln zwischen einer Saugseite und einer Druckseite. Die Einhaltung eines axialen Spaltmaßes ist nicht erforderlich, da die Schraubenspindeln im Betrieb gegen eine Anlauffläche an der Saugseite gedrückt werden.

Darüber hinaus weist die Schraubenspindelmechanik der erfindungsgemäßen Temperierungsvorrichtung im Vergleich zu Kreiselpumpen eine geringere, akustisch wirksame Fläche zu dem umgebenden Gehäuse auf. Die Umlaufbewegung der Flügel eines Flügelrads erzeugen drehzahlabhängige Druckschwankungen an Kammerwänden der Pumpenkammer, die in einem resonanten Frequenzbereich von Gehäuseteilen liegen können.

Alternative Typen von Verdrängerpumpen, wie Flügelzellenpumpen oder Drehkolbenpumpen erzeugen durch die Verdrängungsvorgänge druckseitige Pulsationen, die erhebliche Schwingungen im Zulauf des Temperierungskreislaufs hervorrufen. Unabhängig von akustischen Frequenzen wird angestrebt, Vibrationen in Batteriespeichermodulen gering zu halten, um Ermüdungsschäden an zahlreichen Kontakt- und Lötstellen einer Leiterstruktur zwischen den einzelnen Batteriezellen zu vermeiden.

Die Umlaufbewegung von Schraubenspindeln erzeugt hingegen ein relativ gleichförmiges Förderverhalten. Demnach gewährleistet die Pumpe der erfindungsgemäßen Temperierungsvorrichtung für ein Batteriespeichermodul eine geringere Geräuschentwicklung, insbesondere in Verbindung mit einem Hohlraum zur Aufnahme von Batteriezellen in der Temperierungsvorrichtung.

Zwar sind im Stand der Technik Schraubenspindelpumpen bekannt, diese werden jedoch bislang in anderer Bauart und Anwendung eingesetzt.

Schraubenspindelpumpen weisen eine verschmutzungsunempfindliche, robuste Drehkolbenmechanik auf, die ohne filigrane Elemente wie Sperrschieber oder dergleichen auskommt. Eine volumetrische Verstellung gegenüber einer vorgegebenen Drehzahl ist nicht möglich. Mechanisch angetriebene Schraubenspindelpumpen sind vornehmlich aus dem Einsatz in großdimensionierten Anwendungen, wie z.B. Ölpumpen in stationären Anlagen oder Schiffsmotoren bekannt, in denen sie bei relativ konstanten Betriebspunkten laufen.

Im Bereich der Kraftstoffförderpumpen von Fahrzeugen sind in letzter Zeit kleiner dimensionierte, elektrisch angetriebene Schraubenspindelpumpen bekannt geworden. Der elektrische Antrieb derartiger Kraftstoffförderpumpen ist als nasslaufender Elektromotor ohne Spalttopf ausgeführt, sodass sowohl der Rotor als auch der Stator mit dem Kraftstoff in Kontakt stehen.

So beschreibt die US 2018/0216614 A1 eine Schraubenspindelpumpe, die als Kraftstoffpumpe vorgesehen ist. An einem Gehäuse der Schraubenspindelpumpe ist eine Abdeckung mit einem axialen Auslass angebracht. Der elektrische Motor ist in einer Auslasskammer der Abdeckung aufgenommen und wird von dem Kraftstoff durchströmt bevor er den Auslass verlässt.

Die DE 10 2015 101 443 B3 beschreibt eine Kraftstoffpumpe mit einem Gehäuse, in dem ein elektrischer Antriebsmotor mit einer Schraubenspindelpumpe gekoppelt ist. Der Kraftstoff durchströmt den Antriebsmotor bevor er den druckseitigen Auslass verlässt.

Die WO 2014/138519 A1 offenbart eine elektrische Flüssigkeitspumpe vom Schraubenspindeltyp. Die Flüssigkeit, die durch einen Einlass und einen Auslass fließt, umgibt auch den Motor. Als Flüssigkeit wird ein Kraftstoff genannt.

Die DE 10 2017 210 771 A1 zeigt eine elektrisch angetriebene Schraubenspindelpumpe als Kraftstoffförderaggregat. Ein Pumpengehäuse und ein Elektromotor sind in einem Mantel aufgenommen. In der dargestellten Ausführung, die keinen Spalttopf am Stator des Elektromotors aufweist, stehen die elektrischen Bauteile des Motors innerhalb einer Auslassführung auf einer Druckseite der Spindelkammer in direktem Kontakt mit dem Kraftstoff.

Die bekannten Schraubenspindel-Kraftstoffpumpen sind jedoch nicht auf eine Anwendung als Pumpe der erfindungsgemäßen Temperierungsvorrichtung eines Batteriespeichermoduls übertragbar. Im Gegensatz zu einem ölbasierten Kraftstoff würde ein wasserbasiertes Temperierungsmedium bzw. ein Kühlmittel die freiliegenden Bauteile des nasslaufenden Elektromotors, wie beispielsweise die Spulenwicklungen des Stators, korrosiv schädigen. Insbesondere soll mit der Erfindung eine Temperiervorrichtung für ein Batteriespeichermodul angegeben werden, welches eine kostengünstige Serienfertigung erheblich erleichtert.

Des Weiteren ist aus der nachveröffentlichten WO 2020/164776 A1 eine Temperierungsvorrichtung mit den Merkmalen des Oberbegriffs des Anspruchs 1 bekannt.

Schließlich ist aus der DE102018107139 A1 eine Kühlvorrichtung für ein Batteriepack eines Elektrofahrzeugs bekannt, wobei eine Drehkolbenpumpe für die Zirkulation des Kühlfluids verwendet wird.

Die Erfindung sieht eine Temperierungsvorrichtung für ein Batteriespeichermodul mit einer Schraubenspindelmechanik zum Fördern eines Temperierungsmediums vor. Die Erfindung sieht ferner einen trockenlaufenden Elektromotor zum Antrieb der Spindelmechanik vor. Die Temperierungsvorrichtung ist zur Führung eines korrosiven Temperierungsmediums geeignet.

Gemäß der Erfindung sind eine angetriebene Schraubenspindel und eine mitgeschleppte Schraubenspindel in dem Spindelgehäuse mittels einer radialen Spielpassung schwimmend gelagert und axial beweglich. Dadurch ergibt sich selbsttätig ein wirksamer radialer Dichtspalt gegen eine Leckage zwischen den Schraubenspindeln und dem Spindelgehäuse. Ein axialer Dichtspalt bildet sich unabhängig von Fertigungstoleranzen. Die Einhaltung eines axialen Spaltmaßes am gegenüberliegenden Ende der Schraubenspindeln ist nicht erforderlich. Somit wird eine kostengünstige Serienfertigung erheblich erleichtert.

Vorteilhafte Weiterbildungen der Erfindung sind Gegenstand der abhängigen Ansprüche.

Gemäß einem Aspekt der Erfindung kann die Temperierungsvorrichtung ferner eine Steckkupplung mit einem axialen Freiheitsgrad aufweisen, die zwischen einer Welle des Elektromotors und der angetriebenen Schraubenspindel angeordnet ist. Durch den Einsatz einer Steckkupplung, die zumindest ein axiales Spiel zulässt, wird die Spielpassung zur schwimmenden Lagerung der angetriebenen Schraubenspindel möglichst wenig beeinträchtigt. Ferner wird eine Schnittstelle zur Ankoppelung einer Welle von unterschiedlichen Elektromotoren geschaffen und ein modulares Antriebskonzept für die Temperierungsvorrichtung ermöglicht.

Gemäß einem Aspekt der Erfindung kann die Temperierungsvorrichtung ferner ein Aufnahmegehäuse aufweisen, das einen geöffneten Hohlraum und eine Zulaufstrecke sowie eine Rücklaufstrecke des Temperierungskreislaufs, die in den geöffneten Hohlraum münden, umfassen. Dabei ist das Spindelgehäuse von einem axialen Ende bis zu einem Gehäuseflansch in den geöffneten Hohlraum einsteckbar, und der Temperierungskreislauf ist mit der Einlassöffnung und der Auslassöffnung des Spindelgehäuses verbindbar.

Diese Ausgestaltung sieht eine konstruktive Integration zwischen einem pumpenseitigen Gehäuse und einem Gehäuseteil der Temperierungsvorrichtung vor. Somit können Schlauchverbindungen oder Fluidkupplungen an einer Schnittstelle zwischen der Pumpe und einem Zulauf sowie Rücklauf des Temperierungskreislaufs entfallen und ein entsprechender Bauraum hierfür in der Temperierungsvorrichtung eingespart werden.

Der geöffnete Hohlraum des Aufnahmegehäuses, der das Spindelgehäuse umgibt, wird als eine Austrittskammer der Pumpe verwendet. Bei der Konstruktion des Aufnahmegehäuses der Temperierungsvorrichtung steht somit ein Freiheitsgrad von 360° bezüglich einer radialen Anordnung der Rücklaufstrecke zu der Pumpe zur Verfügung. Somit kann eine Anordnung gewählt werden, die auf einen möglichst geringen Bauraum optimiert ist.

Zu einer Seite weist die Pumpe einen in einen Hohlraum einsteckbaren Pumpenkopf in Form des Spindelgehäuses auf und zu der anderen Seite ein außerhalb des Hohlraums liegendes Motorgehäuse. Trotz der integrierten Bauweise wird eine Verwendung von Elektromotoren mit unterschiedlicher Dimensionierung ermöglicht.

Gemäß einem Aspekt der Erfindung kann ein Gehäuseflansch, der zwischen dem Spindelgehäuse und dem Motorgehäuse angeordnet ist, einen Lagersitz für ein Wellenlager aufweisen, der sich zu der Seite des Motorgehäuses erstreckt. Diese Ausgestaltung ermöglicht den Einsatz eines einzigen Wellenlagers und trägt zu einer kompakten axialen Abmessung der Pumpe in der Temperierungsvorrichtung bei.

Gemäß einem Aspekt der Erfindung kann das Spindelgehäuse im Bereich der Einlassöffnung durch eine Passfeder abgegrenzt sein, die durch einen radialen Montagespalt eingesetzt ist. Durch Ausgestaltung einer Passfeder, die vereinfacht als Lagerschild mit einer Einlassöffnung ausgebildet sein kann, wird die Montage und Einpassung der Schraubenspindeln vereinfacht.

Gemäß einem Aspekt der Erfindung kann eine Welle des Elektromotors durch ein Wellenlager mit einer Gleitlagerbuchse gelagert sein, und die Gleitlagerbuchse kann von einer abgedichteten Schmierstofffüllung umgeben sein. Diese Ausgestaltung ermöglicht eine kompakte und langlebige Lagerung der Welle. Die abgedichtete Schmierung der Gleitlagerbuchse widersteht einer Ausspülung oder Ablagerungen durch ein Temperierungsmittel. Im Gegensatz zu ölbasierten Fördermedien wie Schmierölen oder Kraftstoffen kann der Kontakt des Gleitlagers mit einem Temperierungsmedium die Gleiteigenschaften des Wellenlagers beeinträchtigen. Ferner stellt die abgedichtete Schmierstofffüllung gemeinsam mit dem Gleitlagerspalt der Gleitlagerbuchse eine besondere Dichtungsfunktion sicher. Eine gute und langlebige Dichtungsfunktion ist insbesondere bei einem Betrieb mit höheren Förderdrücken einerseits und dem Einsatz eines Trockenläufer-Elektromotors andererseits, von hoher Relevanz für eine Lebensdauer der Pumpe sowie einer Betriebssicherheit des zu temperierenden Batteriespeichermoduls.

Gemäß einem Aspekt der Erfindung kann eine Leistungselektronik in dem Motorgehäuse in einem thermischen Kontakt zu dem Gehäuseflansch angeordnet sein. Der Gehäuseflansch steht in einem Kontakt und in einem Wärmeaustausch mit dem Spindelgehäuse und dem Aufnahmegehäuse, die von dem Temperierungsmedium des Temperierungskreislaufs durchströmt werden. Die Anordnung der Leistungselektronik in einem thermischen Kontakt zu dem Gehäuseflansch stellt eine wirksame Struktur zur Ableitung von Abwärme der Leistungselektronik des Elektromotors bereit.

Die Erfindung wird nachfolgend anhand einer Ausführungsform mit Bezug auf die begleitende Zeichnung beschrieben.

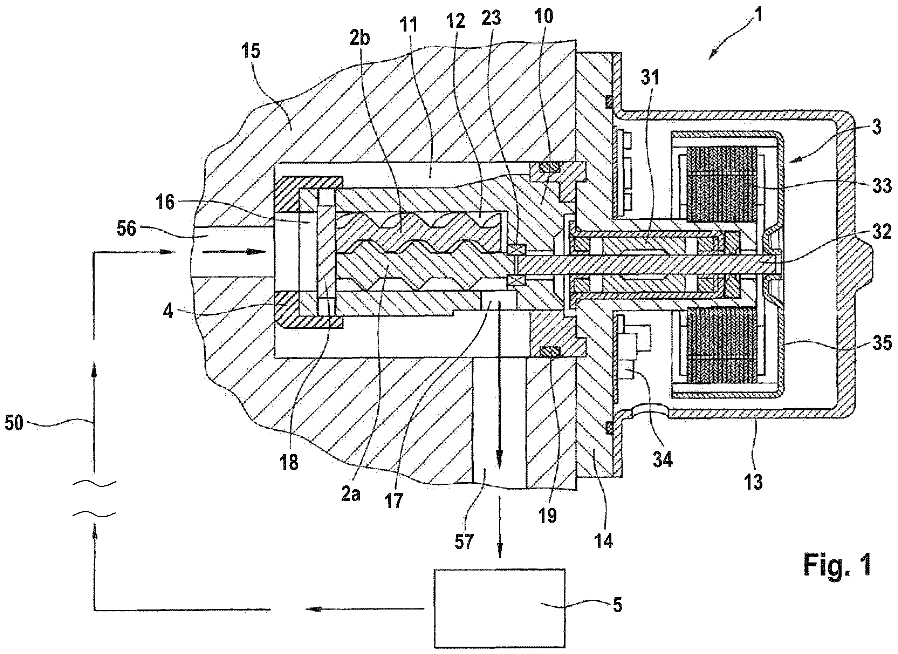

- Fig. 1: zeigt eine schematische Darstellung des Temperierungskreislaufs sowie eine Schnittansicht einer Schraubenspindelmechanik von einer Temperierungsvorrichtung für ein Batteriespeichermodul gemäß einer Ausführungsform der Erfindung.

Unter dem Begriff eines Temperierungskreislaufs wird im Sinne dieser Offenbarung ein Förderkreislauf für ein Temperierungsmedium verstanden. Das Fördermedium kann ein wasserbasiertes Kühlmittel sein, das Additive wie Glykol oder ein anderes Frostschutzmittel enthält. Die Funktionsweise des Temperierungskreislaufs ist nicht auf eine Kühlfunktion beschränkt. So kann der Temperierungskreislauf ebenso eine Aufwärmfunktion mittels einer Wärmequelle bereitstellen, beispielsweise in einer Startphase eines Systems oder wenn die Umgebungstemperatur tief ist.

Die Begriffe Zulaufstrecke und Rücklaufstrecke des Temperierungskreislaufs beziehen sich auf eine Betrachtung des zu temperierenden Batteriespeichermoduls. Demzufolge sind die Zulaufstrecke des Temperierungskreislaufs mit der Auslassöffnung der Pumpe und die Rücklaufstrecke des Temperierungskreislaufs mit der Einlassöffnung der Pumpe verbunden.

In einem Temperierungskreislauf können mehrere Batteriespeichermodule hintereinander oder parallel durchströmt eingebunden sein. Ferner kann ein Temperierungskreislauf mehrere Temperierungsvorrichtungen und mehrere Pumpen verbinden.

Der Begriff Temperierungsquelle bezieht sich im Sinne dieser Offenbarung auf eine Atmosphäre oder konvektive Luftströmung der Systemumgebung, auf eine Kältequelle mit einem Kältemittel oder auf eine Wärmequelle wie ein elektrisches Heizelement. Die entsprechenden Temperierungsquellen stehen über einen Wärmetauscher wie einen Radiator mit Rippen oder dergleichen in einem thermischen Kontakt mit dem Temperierungsmittel in dem Temperierungskreislauf.

Unter dem Begriff Schraubenspindelpumpe werden im Sinne dieser Offenbarung schrägverzahnte Rotationskolbenpumpen mit einer Gewindesteigung zur Verdrängung eines Fördermediums verstanden. Derartige Pumpentypen umfassen in der Regel eine angetriebene Schraubenspindel und wenigstens eine weitere Schraubenspindel, die über einen Eingriff der Verzahnung mitgeschleppt wird.

Bei der Temperierungsvorrichtung, die in Fig. 1 gezeigt ist, ist eine Pumpe 1 innerhalb eines Temperierungskreislaufs 50 integriert angeordnet. Der Temperierungskreislauf 50 dient dazu, ein Batteriespeichermodul 5 zu temperieren, insbesondere eine Abwärme, die während eines Ladens oder einer Leistungsentnahme entsteht, mittels eines von der Pumpe 1 geförderten Temperierungsmediums über einen nicht dargestellten Wärmetauscher abzuführen. In dem nachstehenden Anwendungsfall ist das nicht näher dargestellte Batteriespeichermodul 5 eine Traktionsbatterie für ein batterieelektrisches Fahrzeug. Der Temperierungskreislauf 50 weist eine Mehrzahl von Kanälen mit einem geringen Querschnitt auf, die in einem thermischen Kontakt mit einer Vielzahl von Batteriezellen des Batteriespeichermoduls 5 stehen.

In der Ausführungsform der schematischen Darstellung aus Fig. 1 sind in einem Spindelgehäuse 10 der Pumpe 1 eine angetriebene Schraubenspindel 2a und eine mitgeschleppte Schraubenspindel 2b in einer Spindelkammer 12 des Spindelgehäuses 10 drehbar aufgenommen. Eine Querschnittskontur der Spindelkammer 12 wird durch zwei Bohrungen im Spindelgehäuse 10 gebildet, deren Radien sich überschneiden, um einen Eingriff der Schraubenspindeln 2a, 2b zu gewährleisten. Eine offene Seite der Spindelkammer 12 wird durch eine Passfeder 18 abgegrenzt. Die Passfeder 18 ist als eine stirnseitige Kammerwand der Spindelkammer 12 flächig ausgebildet und weist eine Einlassöffnung 16 des Spindelgehäuses 10 auf. Die Passfeder 18 ist durch einen Montageschlitz senkrecht zu den Schraubenspindeln 2a, 2b in das Spindelgehäuse 10 eingesetzt.

Die Schraubenspindeln 2a, 2b sind durch eine radiale Spielpassung bezüglich der Querschnittskontur der Spindelkammer 12 und durch eine axiale Spielpassung der Spindelkammer 12 schwimmend gelagert. Im Pumpenbetrieb werden die Spindeln durch den Verdrängungsvorgang gegen die Passfeder 18 gedrückt. Die Passfeder 18 dient als ein Lagerschild zur axialen Gleitlagerung der Stirnflächen der Schraubenspindeln 2a, 2b.

Zu der rechts abgebildeten Antriebsseite der Schraubenspindeln 2a, 2b befindet sich eine Druckseite der Spindelkammer 12, die mit einer Auslassöffnung 17 des Spindelgehäuses 10 in Verbindung steht. Zu der anderen Seite der Schraubenspindeln 2a, 2b, auf der die Passfeder 18 angeordnet ist, befindet sich eine Saugseite der Spindelkammer 12. Die Saugseite der Spindelkammer 12 steht mit der Einlassöffnung 17 des Spindelgehäuses 10 in Verbindung.

Das Spindelgehäuse 10 bildet mit den Schraubenspindeln 2a, 2b einen einsteckbaren Pumpenkopf, der von einem axialen Ende des Spindelgehäuses 10, zu dem die Einlassöffnung 16 gerichtet ist, bis zu einem Gehäuseflansch 14, der an das gegenüberliegende axiale Ende des Spindelgehäuses 10 angeschlossen ist, in ein Aufnahmegehäuse 15 der Temperierungsvorrichtung eingesteckt wird. Das Aufnahmegehäuse 15 ist ein integraler Bestandteil der Temperierungsvorrichtung, der Pumpe 1 und des Temperierungskreislaufs 50. Das Aufnahmegehäuse 15 kann ebenso ein integraler Bestandteil eines Modulgehäuses des Batteriespeichermoduls 5 sein, in dem der Temperierungskreislauf 50 in Form von integrierten Kanälen fortgeführt ist.

Das Aufnahmegehäuse 15 weist einen geöffneten Hohlraum 11 auf, der das Spindelgehäuse 10 bis zu dem Gehäuseflansch 14 aufnimmt. In den Hohlraum 11 münden eine Rücklaufstrecke 56 und eine Zulaufstrecke 57 des Temperierungskreislaufs 50. Die Zulaufstrecke 57 mündet in eine Umfangsfläche des Hohlraums 11. Der Hohlraum 11 umgibt das Spindelgehäuse 10 derart, dass ein ringförmiger Teil des Hohlraums 11 in Überschneidung mit der Auslassöffnung 17 und der Mündung der Zulaufstrecke 57 freisteht. Der freistehende Teil des Hohlraums 11 stellt eine druckseitige Verbindung zwischen dem Spindelgehäuse 10 und dem Temperierungskreislauf 50 her.

Die Rücklaufstrecke 56 mündet in eine stirnseitige Bodenfläche des geöffneten Hohlraums 11 und ist der Einlassmündung 16 am axialen Ende des eingesteckten Spindelgehäuses 10 gegenüberliegend zugeordnet. Ein Dichtungselement 4 umgibt die Mündung der Rücklaufstrecke 56 und die Einlassmündung 16, sodass eine saugseitige Verbindung zwischen dem Temperierungskreislauf 50 und dem Spindelgehäuse 10 hergestellt wird. Das Dichtungselement 4 umgibt ferner einen Umfang des Spindelgehäuses 10 im Bereich des Montageschlitzes, durch den die Passfeder 18 eingeführt wird. Somit ist ein möglicher Leckagestrom entlang einer Steckpassung der Passfeder 18 abgedichtet. In dem freistehenden Hohlraum 11 ist in einem nutförmigen radialen Freiraum vor dem Gehäuseflansch 14 ein Dichtungsring 19 eingebracht, um die Druckseite der Pumpe 1 nach außen abzudichten.

Die angetriebene Schraubenspindel 2a steht mit einem Elektromotor 3 in Verbindung. Zu der Druckseite der Spindelkammer 12 weist das Spindelgehäuse 10 einen Durchbruch für eine Welle 32 auf, die von dem Elektromotor 3 angetrieben wird. Ein Motorgehäuse 13, in dem der Elektromotor 3 angeordnet ist, ist auf der gegenüberliegenden Seite des Gehäuseflansches 14 angeschlossen. Ein innenliegender Stator 33 des Elektromotors 3 sitzt auf einem Kragenabschnitt des Gehäuseflansches 14. Ein außenliegender topfförmiger Rotor 35 umläuft den Stator 33 und ist mit einem Ende der Welle 32 verbunden. An dem Kragenabschnitt des Gehäuseflansches 14 ist innenliegend ein Lagersitz für ein Wellenlager 31 ausgebildet. Das Wellenlager 31 ist ein Gleitlager, das zu beiden axialen Enden abgedichtet und mit einem Schmierstoff gefüllt ist. Das andere Ende der Welle 32 ist mittels einer Steckkupplung 23, die ein axiales Spiel zulässt, mit der angetriebenen Schraubenspindel 2a gekoppelt.

Das Motorgehäuse 13 umfasst eine abgetrennte Motorkammer, in welcher der trockenlaufende Elektromotor 3 und eine Elektronik, insbesondere eine Leistungselektronik 34 zur Schaltung der elektrischen Leistung am Elektromotor 3 aufgenommen sind. Der Stator 33 umfasst Feldspulen, die von der Leistungselektronik 34 angesteuert und mit elektrischer Leistung versorgt werden. Der Stator 33 steht mit der Umfangsfläche des Kragenabschnitts des Gehäuseflansches 14 in einem thermischen Kontakt. So wird eine Abwärme aus den Feldspulen des Stators 33 über den Gehäuseflansch 14 auf das Aufnahmegehäuse 15 und das Spindelgehäuse 10 abgeleitet und von dem passierenden Temperierungskreislauf aufgenommen. Ebenso ist die Leistungselektronik 34 in einem thermischen Kontakt zu der Stirnfläche des Gehäuseflansches 14 angeordnet, um eine Abwärme der elektronischen Bauelemente in einen durchströmten Bereich des Temperierungskreislaufs abzuführen.

Nachfolgend wird die Temperierungsvorrichtung in einer Förderrichtung des Temperierungskreislaufs 50 zur Temperierung des Batteriespeichermoduls 5 betrachtet. Ein flüssiges Fördermedium wird aus der Rücklaufstrecke 56 des Temperierungskreislaufs 50 durch die Dichtung 4 und die Einlassöffnung 16 des Spindelgehäuses 10 auf der Saugseite in die Spindelkammer 12 eingesaugt. Eine Drehbewegung von in Eingriff stehenden Schraubenprofilen der drehenden Schraubenspindeln 2a, 2b erzeugt auf der Saugseite der Spindelkammer 12 einen Unterdruck und auf der gegenüberliegenden Druckseite der Spindelkammer 12 einen Überdruck. Das Temperierungsmedium wird durch eine kontinuierliche Verdrängung entlang einer Schraubensteigung der in Eingriff stehenden Schraubenprofile gefördert und durch die Auslassöffnung 17 des Spindelgehäuses 10 aus der Spindelkammer 12 ausgestoßen. Nach der Auslassöffnung 17 strömt das Temperierungsmedium über den Hohlraum 11 in die Zulaufstrecke 57 des Temperierungskreislaufs 50 und zu dem Batteriespeichermodul 5.

Danach durchströmt das Temperierungsmedium in dem Batteriespeichermodul 5 eine Verzweigung von Kanälen des Temperierungskreislaufs 50, die in dem Aufnahmegehäuse 15 der Temperierungsvorrichtung ausgebildet sind und in einem thermischen Kontakt mit den Batteriezellen des Batteriespeichermoduls 5 stehen. Anschließend durchströmt das Temperierungsmedium einen Wärmetauscher und gibt eine Abwärme, die von den Batteriezellen des Batteriespeichermoduls 5 aufgenommen wurde, an ein kühleres Medium wie z.B. die Umgebungsluft ab und wird zurück in die Pumpe 1 eingesaugt. Eine Durchströmung von dem Batteriespeichermodul 5 und dem Wärmetauscher kann in dem Temperierungskreislauf 50 ebenso in umgekehrter Reihenfolge erfolgen. Ferner kann die Temperierungsvorrichtung 50 zusätzlich eine weitere Temperierungsquelle wie ein Heizelement aufweisen, das von dem Temperierungskreislauf 50 durchströmt wird.

### Bezugszeichenliste:

- 1: Pumpe
- 2a: angetriebene Schraubenspindel
- 2b: mitgeschleppte Schraubenspindel
- 3: Elektromotor
- 4: Dichtung
- 5: Batteriespeichermodul
- 10: Spindelgehäuse
- 11: Hohlraum
- 12: Spindelkammer
- 13: Motorgehäuse
- 14: Gehäuseflansch
- 15: Aufnahmegehäuse
- 16: Einlassöffnung des Spindelgehäuses
- 17: Auslassöffnung des Spindelgehäuses
- 18: Passfeder
- 19: Dichtungsring
- 23: Steckkupplung
- 31: Wellenlager
- 32: Welle
- 33: Stator
- 34: Leistungselektronik
- 35: Rotor
- 50: Temperierungskreislauf
- 56: Rücklaufstrecke des Temperierungskreislaufs
- 57: Zulaufstrecke des Temperierungskreislaufs

## Patentansprüche

1. Temperierungsvorrichtung für ein Batteriespeichermodul (5), aufweisend:
einen Temperierungskreislauf (50), eingerichtet zum Temperieren einer Mehrzahl von Batteriezellen in dem Batteriespeichermodul (5); wobei
der Temperierungskreislauf (50) ein Temperierungsmedium führt und eine Mehrzahl von Kanälen umfasst, die in einem thermischen Kontakt mit den Batteriezellen stehen;
einen Wärmetauscher, der einen thermischen Kontakt zwischen dem Temperierungsmedium und einer Temperierungsquelle herstellt;
wobei
eine Pumpe (1) der Temperierungsvorrichtung zum Fördern des Temperierungskreislaufs (50) umfasst:
ein Spindelgehäuse (10) mit einer Einlassöffnung (16) und einer Auslassöffnung (17); und
wenigstens eine Schraubenspindel (2a, 2b), die in dem Spindelgehäuse (10) drehbar aufgenommen und mit dem Elektromotor (3) gekoppelt ist; wobei
der Elektromotor (3) als Trockenläufer ausgebildet ist, und zu dem Spindelgehäuse (10) abgegrenzt angeordnet ist
**dadurch gekennzeichnet, dass**
eine angetriebene Schraubenspindel (2a) und eine mitgeschleppte Schraubenspindel (2b) in dem Spindelgehäuse (10) mittels einer radialen Spielpassung schwimmend gelagert und axial beweglich sind.

2. Temperierungsvorrichtung nach Anspruch 1, ferner aufweisend
eine Steckkupplung (23) mit einem axialen Freiheitsgrad, die zwischen einer Welle (32) des Elektromotors (3) und der angetriebenen Schraubenspindel (2a) angeordnet ist.

3. Temperierungsvorrichtung nach einem der vorhergehenden Ansprüche, ferner aufweisend:
ein Aufnahmegehäuse (15), das einen geöffneten Hohlraum (11) und eine Zulaufstrecke (57) sowie eine Rücklaufstrecke (56) des Temperierungskreislaufs (50), die in den geöffneten Hohlraum (11) münden, umfasst; wobei
das Spindelgehäuse (10) von einem axialen Ende bis zu einem Gehäuseflansch (14) in den geöffneten Hohlraum (11) einsteckbar ist, und der Temperierungskreislauf (50) mit der Einlassöffnung (16) und der Auslassöffnung (17) des Spindelgehäuses (10) verbindbar ist.

4. Temperierungsvorrichtung nach einem der vorhergehenden Ansprüche, wobei
ein Gehäuseflansch (14), der zwischen dem Spindelgehäuse (10) und dem Motorgehäuse (13) angeordnet ist, einen Lagersitz für ein Wellenlager (31) aufweist, der sich zu der Seite des Motorgehäuses (13) erstreckt.

5. Temperierungsvorrichtung nach einem der vorhergehenden Ansprüche, wobei
das Spindelgehäuse (10) im Bereich der Einlassöffnung (16) durch eine Passfeder (18) abgegrenzt ist, die durch einen radialen Montagespalt eingesetzt ist.

6. Temperierungsvorrichtung nach einem der vorhergehenden Ansprüche, wobei
eine Welle (32) des Elektromotors (3) durch ein Wellenlager (31) mit einer Gleitlagerbuchse gelagert ist, und die Gleitlagerbuchse von einer abgedichteten Schmierstofffüllung umgeben ist.

7. Temperierungsvorrichtung nach einem der vorhergehenden Ansprüche, wobei
eine Leistungselektronik (34) in dem Motorgehäuse (13) in einem thermischen Kontakt zu einem Gehäuseflansch (14) angeordnet ist, der mit dem Spindelgehäuse (10) in Kontakt steht.

## Claims

1. A temperature control device for a battery storage module (5), comprising:
a temperature control circuit (50) configured to control the temperature of a plurality of battery cells in the battery storage module (5); wherein
the temperature control circuit (50) carries a temperature control medium and comprises a plurality of channels which are in thermal contact with the battery cells;
a heat exchanger which establishes thermal contact between the temperature control medium and a temperature control source;
wherein
the temperature control device comprises a pump (1) for circulating the temperature control circuit (50):
a spindle housing (10) with an inlet opening (16) and an outlet opening (17); and
at least one screw spindle (2a, 2b) rotatably received within the spindle housing (10) and coupled to the electric motor (3); wherein
the electric motor (3) is designed as a dry-run motor and is arranged separately from the spindle housing (10)
**characterized in that**
a driven screw spindle (2a) and an entrained screw spindle (2b) are mounted in the spindle housing (10) in a floating manner by means of a radial clearance fit and are axially movable.

2. The temperature control device according to claim 1, further comprising
a plug-in coupling (23) with one degree of axial freedom, which is arranged between a shaft (32) of the electric motor (3) and the driven screw spindle (2a).

3. The temperature control device according to one of the preceding claims, further comprising:
a housing (15) comprising an open cavity (11) and a supply line (57) as well as a return line (56) of the temperature control circuit (50), which open into the open cavity (11); wherein
the spindle housing (10) can be inserted into the open cavity (11) from one axial end to a housing flange (14), and the temperature control circuit (50) can be connected to the inlet opening (16) and the outlet opening (17) of the spindle housing (10).

4. The temperature control device according to one of the preceding claims, wherein
a housing flange (14), which is arranged between the spindle housing (10) and the motor housing (13), comprises a bearing seat for a shaft bearing (31) which extends towards the side of the motor housing (13).

5. The temperature control device according to one of the preceding claims, wherein
the spindle housing (10) is bounded in the region of the inlet opening (16) by a key (18) which is inserted through a radial assembly gap.

6. The temperature control device according to one of the preceding claims, wherein
a shaft (32) of the electric motor (3) is supported by a shaft bearing (31) comprising a plain bearing bush, and the plain bearing bush is surrounded by a sealed lubricant filling.

7. The temperature control device according to one of the preceding claims, wherein
a power electronics unit (34) is arranged within the motor housing (13) in thermal contact with a housing flange (14) which is in contact with the spindle housing (10).

## Revendications

1. Un dispositif de régulation de température pour un module de stockage à batterie (5), comprenant :
un circuit de régulation de température (50), conçu pour réguler la température d'une pluralité de cellules de batterie dans le module de stockage à batterie (5) ;
dans lequel
le circuit de régulation de température (50) transporte un fluide de régulation de température et comprend une pluralité de canaux en contact thermique avec les cellules de batterie ;
un échangeur de chaleur qui établit un contact thermique entre le fluide de régulation de température et une source de régulation de température ;
dans lequel
une pompe (1) du dispositif de régulation de température est prévue pour alimenter le circuit de régulation de température (50) :
un carter de broche (10) comportant une ouverture d'entrée (16) et une ouverture de sortie (17) ; et
au moins une broche á vis (2a, 2b) logée de manière rotative dans le carter de broche (10) et couplée au moteur électrique (3) ; dans lequel
le moteur électrique (3) est conçu comme un moteur à rotor sec et est disposé de manière séparée par rapport au carter de broche (10)
**caractérisé en ce que**
une broche à vis entraînée (2a) et une broche à vis entraînée par entraînement (2b) sont montées de manière flottante dans le carter de broche (10) au moyen d'un ajustement avec jeu radial et sont mobiles axialement.

2. Le dispositif de régulation de température selon la revendication 1, comprenant en outre
un accouplement à emboîtement (23) présentant un degré de liberté axial, qui est disposé entre un arbre (32) du moteur électrique (3) et la broche á vis entraînée (2a).

3. Le dispositif de régulation de température selon l'une des revendications précédentes, comprenant en outre :
un boîtier de réception (15) qui comprend une cavité ouverte (11) ainsi qu'un tronçon d'alimentation (57) et un tronçon de retour (56) du circuit de régulation de température (50), qui débouchent dans la cavité ouverte (11) ; dans lequel
le carter de broche (10) peut être inséré dans la cavité ouverte (11) depuis une extrémité axiale jusqu'à une bride de carter (14), et le circuit de régulation de température (50) peut être relié à l'orifice d'entrée (16) et à l'orifice de sortie (17) du carter de broche (10).

4. Le dispositif de régulation de température selon l'une des revendications précédentes, dans lequel
une bride de carter (14), disposée entre le carter de broche (10) et le carter de moteur (13), comporte un logement de palier pour un palier d'arbre (31) qui s'étend vers le côté du carter de moteur (13).

5. Le dispositif de régulation de température selon l'une des revendications précédentes, dans lequel
le carter de broche (10) est délimité, au niveau de l'orifice d'entrée (16), par une clavette (18) qui est insérée à travers un jeu de montage radial.

6. Le dispositif de régulation de température selon l'une des revendications précédentes, dans lequel
un arbre (32) du moteur électrique (3) est supporté par un palier d'arbre (31) comportant une douille de palier lisse, et la douille de palier lisse est entourée d'une charge de lubrifiant étanche.

7. Le dispositif de régulation de température selon l'une des revendications précédentes, dans lequel
un circuit électronique de puissance (34) est disposé dans le carter du moteur (13) en contact thermique avec une bride de carter (14) qui est en contact avec le carter de broche (10).
